# EUROPÄISCHE PATENTSCHRIFT

(11) **EP 3 232 811 B1**
(45) Veröffentlichungstag und Bekanntmachung des Hinweises auf die Patenterteilung: **20.02.2019**
(21) Anmeldenummer: 15804107.9
(22) Anmeldetag: 01.12.2015
(51) Int. Cl.: A23L 3/015

(54) **VERFAHREN ZUR HOCHDRUCKBEHANDLUNG EINES PRODUKTS**
METHOD FOR THE HIGH-PRESSURE TREATMENT OF A PRODUCT
PROCÉDÉ DE TRAITEMENT À HAUTE PRESSION D'UN PRODUIT

(30) Priorität: 17.12.2014 DE 102014118876
(43) Veröffentlichungstag der Anmeldung: 25.10.2017
(73) Patentinhaber: Uhde High Pressure Technologies GmbH, 58093 Hagen (DE); thyssenkrupp AG, 45143 Essen (DE)
(72) Erfinder: KNAUF, Wilfried, 58313 Herdecke (DE); NÜNNERICH, Peter, 57080 Siegen (DE)
(74) Vertreter: thyssenkrupp Intellectual Property GmbH
(86) Internationale Anmeldenummer: PCT/EP2015/078161
(87) Internationale Veröffentlichungsnummer: WO 2016/096399

(56) Entgegenhaltungen:
- EP-A2- 2 308 759
- EP-A2- 2 364 598
- WO-A1-2006/129180
- DE-A1- 19 932 375
- US-A1- 2005 051 194
- HUGO MÃ JICA-PAZ ET AL: "High-Pressure Processing Technologies for the Pasteurization and Sterilization of Foods", FOOD AND BIOPROCESS TECHNOLOGY ; AN INTERNATIONAL JOURNAL, SPRINGER-VERLAG, NEW YORK, Bd. 4, Nr. 6, 15. März 2011 (2011-03-15), Seiten 969-985, XP019914706, ISSN: 1935-5149, DOI: 10.1007/S11947-011-0543-5

## Beschreibung

Die Erfindung betrifft ein Verfahren zur Hochdruckbehandlung eines Produkts, insbesondere eines verpackten Lebensmittels, wobei in einem ersten Verfahrensschritt das Produkt in einer Hochdruckkammer mit einem Druckmedium beaufschlagt wird, wobei in einem nachfolgenden Verfahrensschritt der in der Hochdruckkammer aufgebaute Druck wieder verringert wird, wobei die Verringerung des Drucks in einer oder mehreren Phasen stattfindet und wobei die Druckverringerung zumindest in einer der Phasen geregelt gedrosselt wird. Die Erfindung betrifft des Weiteren ein System zur Hochdruckbehandlung eines Produkts.

Hochdruckbehandlungen werden heutzutage in verschiedenen Anwendungsgebieten eingesetzt. Eines davon ist die Kompaktierung von keramischen oder metallischen Pulvern (CIP). Hierbei werden Chargen von Pulverpartikel in einer Hochdruckkammer fest in Form gepresst, so dass der Pressling sich anschließend wie ein spröder Werkstoff verhält und seine beim Pressvorgang angenommene Form bei entsprechend vorsichtiger Behandlung beibehält.

Mittlerweile findet die Hochdruckbehandlung auch in der Lebensmittelindustrie Anwendung. Für viele Lebensmittel werden üblicherweise Produktverpackungen entworfen, die Qualitätseinbußen verhindern oder zumindest hinaus zögern sollen. Jedoch können die Produkte bereits vor oder während des Verpackungsprozesses mit schädlichen Stoffen oder Mikroben in Kontakt kommen. Diese werden dann mit verpackt und greifen das Produkt innerhalb der Verpackung an. Um diesen Prozess zumindest herauszuzögern, sind bereits vor der Einführung der Hochdruckbehandlung eine Vielzahl von Methoden entwickelt worden. Nur beispielhaft seien hier die Verpackung unter Schutzgasatmosphäre, die Vakuumverpackung oder die Pasteurisation des Lebensmittels in der Verpackung genannt.

Bei der Hochdruckbehandlung von Lebensmitteln wird das verpackte Produkt über einen gewissen Zeitraum sehr hohen Drücken, beispielsweise zwischen 200 und 600 MPa, ausgesetzt. Dies führt bei den in und am Lebensmittel vorhandenen Mikroorganismen unter anderem zu einer Desintegration der Zellmembran. Die Desintegration hat zur Folge, dass die Mikroorganismen abgetötet werden. Kleinere Strukturen, wie Vitamine, Geschmacks- oder Nährstoffe, bleiben hingegen weitgehend erhalten. Gegenüber der konventionellen Pasteurisation mittels Hitze hat die Hochdruckbehandlung somit den Vorteil, weder den Geschmack zu stark zu verändern noch den Vitamingehalt übermäßig herabzusetzen.

Bei den hier beschriebenen Hochdruckbehandlungen ist zu beachten, dass der Druckaufbau relativ unkritisch ist, der Druckabbau jedoch in vielen Fällen einen Bereich aufweist, in dem ein zu schneller Druckabbau zu Schäden am Produkt oder an der Verpackung führen kann.

Die Schäden werden durch physikalische Prozesse verursacht, die sich je nach Anwendungsgebiet und Produkt unterscheiden. Beispielsweise wird bei der Kompaktierung von Pulvern während des Druckaufbaus zwischen den Pulverkörnern vorhandene Luft im Pressling eingeschlossen und komprimiert. Während des Druckabbaus expandiert die eingeschlossene Luft und tritt aus dem Pressling aus. Expandiert die Luft schneller, als sie aus dem Pressling entweichen kann, führt das zwangsläufig zu Schäden am Produkt.

Bei verpackten Lebensmitteln führen die hohen Drücke dazu, dass die das Lebensmittel umgebenden Gase oder Stoffe in das Produkt und/oder die Verpackung hinein diffundieren können. Wird der Druck wieder reduziert, kommt es ab einem bestimmten Druckniveau zu dem entgegen gesetzten Prozess. Bei zu schnellem Druckabbau können die eingeschlossenen Gase jedoch nicht schnell genug aus Produkt und/oder Verpackung herausdiffundieren und führen durch ihre Expansion zu Blasenbildung am Produkt bzw. einer Beschädigung der Verpackungsfolie, beispielsweise deren Delaminierung.

Um derartige Schäden zu vermeiden, schlägt das DE 10 2009 042 088 ein Verfahren zur Hochdruckbehandlung von Produkten vor, bei dem der Druckabbau in verschiedene Phasen unterteilt ist. In einer ersten unkritischen Phase erfolgt der Druckabbau ungeregelt, während in einer daran anschließenden zweiten Phase der Druckabbau mittels eines über einen Drucksensor steuerbaren Stellglieds erfolgt.

Ein solches System mit seiner rein reaktiven Steuerung erreicht aber die gewünschte Druckabbaurate nur ungenau. Darüber hinaus hängt die Güte der Steuerung zudem stark von der Zusammensetzung des Produkts, von der im Behälter befindlichen Produktmenge und insbesondere der Gasmenge ab. Die notwendige Reproduzierbarkeit der vorbekannten Hochdruckbehandlung ist deshalb nur ungenügend gewährleistet.

WO 2006/129180 A1 beschreibt ein Verfahren und eine Vorrichtung zum Verringern des Drucks in einer Druckkammer.

Aufgabe der Erfindung ist es, ein Verfahren zur Hochdruckbehandlung eines Produkts vorzuschlagen, bei dem die Regelgüte und Reproduzierbarkeit des Druckabbaus, respektive der Druckverringerung, verbessert ist. Eine weitere Aufgabe der Erfindung ist es, eine demgemäße Vorrichtung vorzuschlagen.

Diese Aufgaben werden gelöst durch das Verfahren mit den Merkmalen gemäß Anspruch 1 und das System gemäß Anspruch 10. Der Grundgedanke der Erfindung sieht dabei vor, dass zur Regelung der Druckverringerung ein zweiter Parameter, insbesondere das zum Erreichen einer bestimmten Druckdifferenz aus der Hochdruckkammer zu entlassende Volumen des Druckmediums, herangezogen wird. Der zweite Parameter wird somit zur Ansteuerung eines oder mehrerer Mittel zum Druckabbau genutzt und dient dazu, beim Druckabbau eine gewünschte Druck-Zeit-Kurve zu erreichen. Der zweite Parameter wird mittels eines beim Druckaufbau aufgenommenen ersten Parameters anhand eines mathematischen Modells bestimmt. Der erste Parameter charakterisiert dabei das Verhalten des Drucks in Abhängigkeit einer der Druckkammer zugeführten Menge eines Hochdruckmediums, insbesondere des für den Druckaufbau benötigten Volumens oder der Masse des Hochdruckmediums. Erfindungsgemäß werden somit neben den zur Regelung normalerweise genutzten Daten, beispielsweise den bekannten oder zuvor vermessenen Kennlinien des oder der Regelventile und dem aktuellen Druck im System, zusätzliche Werte herangezogen. Diese zusätzlichen Werte basieren auf einer Messung während der Druckaufbauphase.

Die Erfindung macht es sich dabei zu Nutze, dass es sich bei der Hochdruckkammer um ein geschlossenes System handelt, so dass von Außen einwirkende Störgrößen praktisch keinen Einfluss auf die System-Parameter haben. Zudem handelt es sich bei der hier beschriebenen Hochdruckbehandlung um einen chargenweise ablaufenden Prozess, bei dem die Rahmenbedingungen während des Druckaufbaus und Druckabbaus für die jeweils betrachtete Charge zumindest im Wesentlichen unverändert bleiben. Der erste und der zweite Parameter können demzufolge zueinander in Bezug gesetzt werden, obwohl sie gegensätzlich verlaufen.

Der mittels einer Messung beim Druckaufbau bestimmte erste Parameter kann somit genutzt werden, um einen beim Druckabbau entgegengesetzt verlaufenden zweiten Parameter vorherzusagen bzw. abzuschätzen. Genauer gesagt lässt sich anhand eines an einen Punkt oder für einen Abschnitt entlang der Druckaufbaukurve gemessenen ersten Werts der für den entsprechenden Punkt oder Abschnitt der Druckabbau kurve zu erwartende zweite Wert bestimmen. Natürlich muss der erste Parameter nicht zwingend ein gemessener Wert sein, sondern kann auch durch eine Interpolation bestimmt werden.

Die Korrelation zwischen erstem und zweitem Parameter wird dazu genutzt, den zu erwartenden zweiten Wert mittels des mathematischen Modells vorherzusagen und für die Regelung des Druckabbaus heranzuziehen. Mit seiner Hilfe wird der für die gewünschte Geschwindigkeit des Druckabbaus, also die gewünschte Druckdifferenz pro Zeiteinheit, erforderliche Stellungsgrad des Mittels zum geregelten Druckabbau eingestellt und gegebenenfalls korrigiert. Hierdurch wird eine im Vergleich zu einer Regelung der vorbekannten Art höhere Regelgüte und Reproduzierbarkeit erreicht. Das Mittel zum geregelten Druckabbau ist vorzugsweise ein Regelventil und wird im Folgenden auch als solches bezeichnet.

Ein für die dargelegte Regelung geeignetes System zur Hochdruckbehandlung eines Produkts umfasst eine erste Vorrichtung zur Beaufschlagung der Druckkammer mit einem Hochdruckmedium und eine zweite Vorrichtung zur Verringerung des Drucks in der Druckkammer. Dabei weist die zweite Vorrichtung zumindest ein Mittel zum geregelten Druckabbau und eine Steuerung auf. Die Steuerung umfasst eine Datenverarbeitungsvorrichtung zur Regelung des zumindest einen Regelventils. Erfindungsgemäß weist die erste Vorrichtung eine Messvorrichtung auf, die über eine Datenverbindung mit der Datenverarbeitungsvorrichtung zur Regelung des zumindest einen Regelventils verbunden ist. Über die Datenverbindung wird der beim Druckaufbau gemessene erste Parameter an die Datenverarbeitungsvorrichtung übertragen und kann von dieser in den für die Regelung der Entspannung genutzten zweiten Parameter umgewandelt werden.

Die Messvorrichtung ist in Fließrichtung des Druckmediums entweder in einer Position vor oder hinter der Hochdruckpumpe an der Druckleitung angeordnet oder an der Hochdruckpumpe selbst angeordnet, wobei das System ferner eine Datenverbindung umfasst, die mit einem Drucksensor verbunden ist, der direkt mit der Hochdruckkammer verbunden ist oder indirekt an einer Druckleitung angeordnet ist, welche die Druckkammer mit einem Regelventil verbindet, wobei zwischen Druckkammer und Regelventil ein Absperrventil vorgesehen ist, welches die Druckkammer gegenüber dem Regelventil abdichtet und wobei das Regelventil über eine Datenverbindung mit der Datenverarbeitungseinrichtung verbunden ist und hierüber angesteuert wird.

Ein besonderer Vorteil des erfindungsgemäßen Systems ist es, dass bereits existierende Hochdrucksysteme mit Hochdruckkammern ohne großen Aufwand aufgerüstet werden können. Hierzu muss lediglich eine Vorrichtung zur Messung des ersten Parameters ergänzt, eine Datenverbindung zwischen der Messvorrichtung und der Datenverarbeitungsvorrichtung zur Regelung des zumindest einen regelbaren Mittels hergestellt und eine Programmierung der erfindungsgemäßen Regelung in der Datenverarbeitungsvorrichtung, respektive dem Steuergerät zur Regelung des Druckabbaus in der Hochdruckkammer erstellt werden.

Bei der hier dargelegten Regelung ist insbesondere vorteilhaft, dass sie nicht nur für ein spezielles Produkt anwendbar ist, sondern allgemein bei chargenweise betriebenen Hochdruckverfahren angewandt werden kann. Von besonderem Vorteil ist es, dass die Vergleichbarkeit von erstem und zweitem Parameter im Wesentlichen unabhängig von dem Produkt und dem Füllgrad in der Hochdruckkammer, sowie deren Aufbau ist. Sie eignet sich darüber hinaus nicht nur für einen bestimmten kritischen Druckbereich beim Druckabbau, sondern lässt sich prinzipiell für jede Phase des Druckabbaus durchführen.

Eine erfindungsgemäße Regelung des Druckabbaus mit Hilfe des zweiten Parameters umfasst dabei die folgenden Schritte. Vor Beginn der Druckverringerung in der Hochdruckkammer wird die für das Produkt geeignete Entspannungskurve vorgegeben, also der gewünschte zeitliche Verlauf des Druckabbaus definiert. Falls noch keine geeignete Entspannungskurve bekannt ist, muss sie experimentell bestimmt werden. Für das zumindest eine Regelventil wird sodann unter Heranziehung seiner Regelcharakteristik und des zweiten Parameters ein Öffnungsgrad bestimmt, mit dem der gewünschte zeitliche Verlauf des Druckabbaus erreicht werden kann. Nach dem Start des Druckabbaus wird der aktuelle Druck in der Hochdruckkammer oder zwischen Druckkammer und Regelventil mittels Drucksensoren gemessen und dessen Verlauf nachvollzogen. Ergibt ein vorgenommener Soll-Ist-Vergleich eine Abweichung, wird die Ventilstellung entsprechend korrigiert. Die Korrektur erfolgt analog zu dem oben Gesagten, also unter Berücksichtigung des für den Bereich der Entspannungskurve relevanten Wert des zweiten Parameters. Die Regelung erfolgt somit vorzugsweise anhand eines Parameterfelds, wobei das Parameterfeld eine Mehrzahl von zweiten Parametern umfasst, die jeweils für einen bestimmten Abschnitt des Druckabbaus repräsentativ sind. Je nach Problemstellung kann es vorteilhaft sein, für die Regelung anstatt eines Parameterfelds eine mehrdimensionale Parameterfunktion zu verwenden.

Wenn die vorgegebene Entspannungskurve Änderungen des Druckgradienten vorsieht, ist es von Vorteil, wenn die Soll-Ist-Vergleiche an diesen Stellen der Entspannungskurve vorgenommen werden. Um die repräsentativen Werte abschätzen zu können, wird der Druckaufbau in entsprechende Abschnitte unterteilt, für die jeweils ein entsprechender Wert des ersten Parameters ausgelesen wird. Auf diese Art lässt sich der jeweilige Wert des zweiten Parameters vorhersagen und in Bezug zu dem für ihn zutreffenden Abschnitt der Kennlinie des oder der Regelventile setzen. Aus der Kennlinie kann nun der Öffnungsgrad des Regelventils bestimmt werden, mit dem die gewünschte Druckdifferenz pro Zeiteinheit abgebaut werden kann. Sollte die Kennlinie nicht vorliegen, werden das oder die Regelventile vermessen, um die jeweiligen Stellwerte zu erhalten.

Das Parameterfeld definiert auf diese Weise mehrere Zielpunkte auf der vorgegebenen Entspannungskurve. Ist für einen der gewählten Zielpunkte kein Wert des ersten Parameters bestimmt worden, kann der Wert des Zielpunktes ohne Probleme per Interpolation entlang der Entspannungskurve berechnet werden.

Ergibt der Soll-Ist-Vergleich beim Erreichen eines Zielpunktes eine Abweichung, wird der Öffnungsgrad des Regelventils angepasst, um den Gradient des Druckabbaus so zu verändern, dass der nächst folgende Zielpunkt respektive die nächste Stützstelle genauer erreicht wird. Bei dieser Regelung ist es von Vorteil, wenn der Druckgradient für den nächsten zeitlichen Abschnitt nicht beliebig verändert werden kann. Hierzu wird sichergestellt, dass die Druckabbau kurve auch nach der Anpassung des Öffnungsgrads innerhalb eines vorgegebenen Zielkorridors verläuft. Der Zielkorridor definiert dabei den Bereich einer für das Produkt noch geeigneten Abweichung von der Entspannungskurve. Ist der Zielkorridor nicht bekannt, kann er experimentell bestimmt werden.

Würde eine Anpassung beispielsweise dazu führen, dass der Druckgradient im nächsten zeitlichen Abschnitt so steil verläuft, dass Schäden am Produkt auftreten können, wird dies erkannt und die Regelung so angepasst, dass der Druckgradient innerhalb des Zielkorridors verläuft. Insofern ist es kein zwingendes Ziel der Regelung, den nächsten Zielpunkt auf der Druckaufbaukurve exakt zu erreichen. Auf diese Weise können Schäden am Produkt noch besser ausgeschlossen werden.

Vorzugsweise wird als erster Parameter die Masse oder das Volumen des Druckmediums gemessen, welches benötigt wird, um beim Druckaufbau eine bestimmte Druckdifferenz zu erreichen. Wird während der Druckaufbauphase die Druckerhöhung in Abhängigkeit des in die Hochdruckkammer eingepumpten Volumens bestimmt, bilden die gemessenen Druckgradienten eine Druck-Volumen- Kurve aus. Deren Umsetzung auf die Phase des Druckabbaus ermöglicht die Vorhersage, wie viel Volumen des Druckmediums wieder aus dem System entlassen werden muss, um eine bestimmte Druckdifferenz zu erhalten. Entsprechendes gilt für die hierzu alternative Messung der Masse des Druckmediums. Von besonderem Vorteil ist es dabei, den jeweiligen Massen- bzw. Volumenstrom zu messen.

Von besonderem Vorteil ist es, wenn beim Druckaufbau die Anzahl der Pumpenhübe gezählt wird, die benötigt werden, um eine bestimmte Druckdifferenz zu erreichen. Multipliziert mit dem Volumen pro Hub lässt sich ganz einfach das Volumen des Druckmediums berechnen, welches in die Hochdruckkammer gepumpt werden muss, um die bestimmte Druckdifferenz zu erreichen. Mit der Anzahl der Pumpenhübe sind natürlich nicht nur vollständige Hübe gemeint, sondern auch die einer Teilstrecke des Kolbens entsprechenden Bruchteile umfasst.

In einer dazu alternativen Ausführungsform umfasst die Messvorrichtung eine dynamische Volumenmesseinrichtung. Auf besonders einfache Weise kann das für eine bestimmte Druckdifferenz gepumpte Volumen des Druckmediums mittels eines Durchflusssensors (Flowmeter) gemessen werden.

In einer weiteren alternativen Ausführungsform umfasst die Messvorrichtung eine dynamische Massenmesseinrichtung.

Das Messergebnis wird dann genutzt, um das für die gewünschte Entspannung erforderliche Expansionsvolumen zu bestimmen. Aus den Kennlinien des oder der Regelventile werden hierzu die Expansionsvolumina bei bestimmten Drücken und Öffnungsgraden des Regelventils ausgelesen und daraus folgernd der erforderliche Öffnungsgrad für den gewünschten Druckabbau pro Zeiteinheit vorhergesagt.

In einer bevorzugten Ausführungsform wird dem zweiten Parameter zumindest ein Korrekturfaktor respektive Relaxationsfaktor beigegeben. Hiermit können Trägheiten, die zum Beispiel durch beim Druckabbau auftretende Diffusionsprozesse bewirkt werden, bei der Regelung berücksichtigt werden. Die auftretenden zeitabhängigen Effekte werden durch insbesondere variable Korrekturfaktoren eliminiert, die sich aus Soll-Ist-Vergleichen des Drucks während des Druckabbaus ermitteln lassen. Die Eliminierung der durch unterschiedliche Diffusionsprozesse auftretenden Abweichung gewährleistet eine exakte Regelung des Druckabbaus auch bei häufig wechselnden Produkten oder Verpackungen.

Im Folgenden wird eine bevorzugte Ausführungsform der erfindungsgemäßen Regelung mit ihren jeweiligen Verfahrensschritten dargelegt:
Der für die gewünschte Geschwindigkeit der Druckverringerung benötigte zeitliche Verlauf des Druckgradienten gibt eine Entspannungskurve vor, die mittels der Regelung möglichst genau nachvollzogen werden soll. Für die genaue Regelung wird das für einen bestimmten Druckabbau zu erwartende Expansionsvolumen herangezogen.

Zur modellbasierten Abschätzung des Expansionsvolumens wird das Volumen des Druckmediums gemessen, welches für einen bestimmten Druckaufbau in der Hochdruckkammer benötigt wird. Hieraus resultiert eine Druck-Volumen-Kurve, die den Druckaufbau abbildet. Die dazugehörige Funktion wird während des Druckaufbaus berechnet und als Array festgehalten. Das Array enthält die Messwerte für einzelne Punkte des Druckaufbaus sowie die dazugehörige Ableitung. Die berechneten Werte können wie bereits erläutert in eine Druck-Volumen-Kurve für den Druckabbau, respektive eine Entspannungsfunktion umgesetzt werden.

Die für ein schadloses Entspannen erforderliche Entspannungskurve wird als Entspannungsfunktion abgebildet. Hieraus wird ein Stützstellen-Array erstellt, wobei die Stützstellen vorzugsweise auf Punkte der Funktion gesetzt werden, an denen während der geregelten Entspannung der Druckgradient geändert werden soll. Die jeweiligen Zielpunkte der Druckabbaukurve sollten somit so gesetzt werden, dass sie den zeitlichen Verlauf des Druckgradienten möglichst gut abbilden. Falls gewünscht, können die Stützstellen auch zu einem Kontinuum entlang der Druckabbaukurve interpoliert werden.

Für die Regelung wird demzufolge ein Array erstellt, welches auf der Regelcharakteristik des oder der Regelventile und dem zweiten Parameter in Form des zu erwartenden Expansionsvolumens als Eingabewerte basiert. Aus der Ventil-Kennlinie wird der erforderliche Öffnungsgrad ausgelesen, mit dem das erforderlichen Expansionsvolumens in der gewünschten Zeiteinheit aus der Hochdruckkammer entlassen werden kann. Mit dem so ermittelten Öffnungsgrad wird die geregelte Entspannung gestartet. An den Stützpunkten erfolgt jeweils ein Soll-Ist-Vergleich. Die nach einem Soll- Ist-Vergleich eventuell erforderliche Korrektur der Ventilstellung erfolgt wiederum unter Berücksichtigung des für den nächsten zeitlichen Abschnitt zu erwartenden Expansionsvolumens. Die Berechnung erfolgt vorzugsweise mittels Approximation. Besonders einfach kann die Korrektur über eine lineare Approximation berechnet werden. Je nach Anwendungsfall können aber auch komplexe Approximationen zur Anwendung kommen. Natürlich kommt es der hier beschriebenen Regelung entgegen, wenn das zumindest eine Regelventil hierfür stufenlos einstellbar ist.

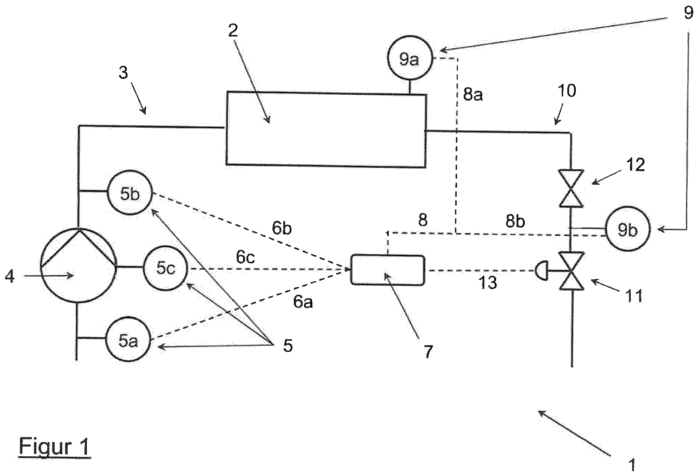

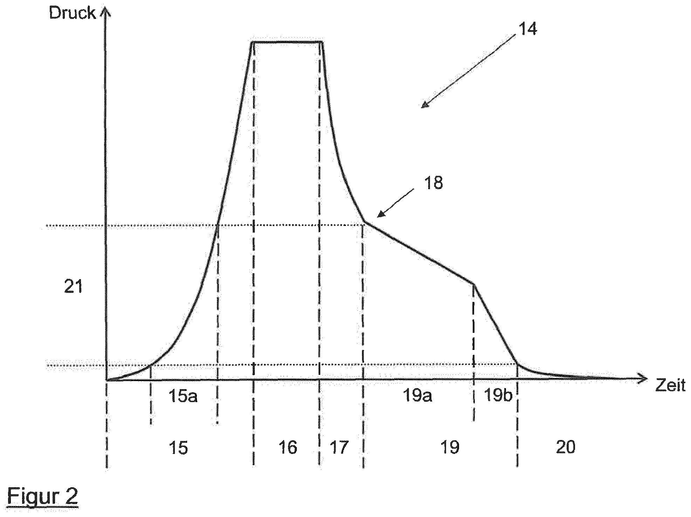

Die Erfindung wird anhand zweier Figuren weiter erläutert. Hierbei zeigt Figur 1 eine Ausführungsform des erfindungsgemäßen Systems zur Hochdruckbehandlung eines Produkts in schematischer Darstellung. Mit Figur 2 wird ein mit Hilfe des erfindungsgemäßen Verfahrens geregelter Druckverlauf beispielhaft erläutert.

Das System 1 zur Hochdruckbehandlung eines Produkts umfasst eine Hochdruckkammer 2, die über eine Druckleitung 3 mit einer Hochdruckpumpe 4 verbunden ist und von dieser mit einem Hochdruckmedium beaufschlagt wird. Eine Messvorrichtung 5 ist in zu einander alternativen Positionen in Fließrichtung des Druckmediums entweder in einer Position vor 5a oder hinter 5b der Hochdruckpumpe 4 an der Druckleitung 3 angeordnet. Alternativ dazu kann sie, wie in der Position 5c gezeigt, an der Hochdruckpumpe 4 selbst angeordnet sein. Die Messvorrichtung 5 misst die Menge des Hochdruckmediums, insbesondere dessen Masse oder Volumen, die durch die Druckleitung 3 fließt bzw. von der Hochdruckpumpe 4 gefördert wird. Die Messvorrichtung 5 übermittelt diese Werte über die hier gestrichelt dargestellte erste Datenverbindung 6a, 6b oder 6c an eine Datenverarbeitungseinrichtung 7.

Die Datenverarbeitungseinrichtung 7 ist über eine zweite, ebenfalls gestrichelt dargestellte Datenverbindung 8 mit einem Drucksensor 9 verbunden. Der Drucksensor 9 kann direkt 9a mit der Hochdruckkammer 2 verbunden sein und/oder indirekt 9b an einer Druckleitung 10 angeordnet werden, welche die Druckkammer 2 mit einem Regelventil 11 verbindet. Zwischen Druckkammer 2 und Regelventil 11 ist ein Absperrventil 12 vorgesehen, welches die Druckkammer 2 gegenüber dem Regelventil 11 abdichtet. Das Regelventil 11 ist über eine dritte, wiederum gestrichelt dargestellte Datenverbindung 13 mit der Datenverarbeitungseinrichtung 7 verbunden und wird hierüber angesteuert.

Die Figur 2 zeigt ein Liniendiagramm 14, mit dem der zeitliche Druckverlauf in der Hochdruckkammer 2 beispielhaft erläutert wird. In einer ersten Phase 15 des Druckaufbaus erhöht sich mit zunehmender Kompression in der Hochdruckkammer 2 der Druckanstieg pro Zeiteinheit. Ist der gewünschte Druck erreicht, folgt eine zweite Phase 16, die sogenannte Plateauphase, in welcher der Druck gehalten wird und in gewünschter Weise auf das in der Hochdruckkammer 2 befindliche Produkt einwirkt.

Daran schließt sich die Entspannung an, beginnend mit einer dritten Phase 17, in welcher der Druck ungeregelt bis zum Startpunkt der geregelten Entspannung 18 abgebaut wird. Die hierauf folgende vierte Phase 19 der geregelten Entspannung unterteilt sich in einen Abschnitt 19a geringeren Druckabbaus und einen Abschnitt 19b stärkeren Druckabbaus. Zu Beginn der vierten Phase 19 wird das Regelventil 11 auf den erfindungsgemäß abgeschätzten Öffnungsgrad eingestellt. Während der Entspannung kann der Öffnungsgrad unter Heranziehung des zweiten Parameter nachgestellt werden. Die Phase 19 kann mit beliebig vielen Zielpunkten, also mit beliebig vielen Soll/Ist-Vergleichen belegt werden, welche der erfindungsgemäßen Regelung zu Grunde liegen. Die Phase 19 der geregelten Entspannung geht über in eine Phase 20, in welcher der noch in der Druckkammer anliegende Restdruck entspannt wird.

Der während der vierten Phase 19 durchlaufende Druckbereich 21 ist der für die Ermittlung des ersten Parameters bevorzugte Druckbereich beim Druckaufbau. Der Druckbereich 21 kann somit in einem Abschnitt 15a der ersten Phase 15 aufgenommen werden.

Sind zwei Drucksensoren 9a, 9b vorgesehen, sind sie über die Datenverbindungen 8a bzw. 8b mit der Datenverarbeitungseinrichtung 7 verbunden. In dieser Variante ist es vorteilhaft, den indirekt an die Hochdruckkammer 2 angebundenen Drucksensor 9b zwischen dem Regelventil 11 und dem Absperrventil 12 an die Druckleitung 10 anzuschließen. Der Drucksensor 9b ist bei dieser Variante während der Phasen 15, 16 und 17 durch das Absperrventil 12 von der Hochdruckkammer 2 getrennt und erst ab dem Startpunkt 18 der geregelten Entspannung mit der Druckkammer 2 verbunden. Dadurch kann für den Sensor 9b ein Instrument für einen niedrigeren Druckbereich und damit mit einer höheren Genauigkeit verwendet werden. Zu beachten ist, dass bei hohen Durchflüssen, insbesondere den damit in Zusammenhang stehenden hohen Druckgradienten, der bei 9b gemessene Druckwert aufgrund des Druckverlustes in der Druckleitung 10 deutlich von dem Druck in der Hochdruckkammer 2 abweicht. Der Drucksensor 9a kann nun für diese Fälle genutzt werden, um den bei 9b gemessenen Druckwert zu korrigieren und die Stabilität der Regelung zu erhöhen.

## Patentansprüche

1. Verfahren zur Hochdruckbehandlung eines Produkts, insbesondere eines verpackten Lebensmittels, wobei in einem ersten Verfahrensschritt das Produkt in einer Hochdruckkammer (2) mit einem Druckmedium beaufschlagt wird, wobei in einem nachfolgenden Verfahrensschritt der in der Hochdruckkammer (2) aufgebaute Druck wieder verringert wird, wobei die Verringerung des Drucks in einer oder mehreren Phasen (17, 19, 20) stattfindet und wobei die Druckverringerung zumindest in einer der Phasen (19) geregelt wird,
**dadurch gekennzeichnet, dass** zur Regelung ein zweiter Parameter herangezogen wird, der mittels eines beim Druckaufbau aufgenommenen ersten Parameters bestimmt wird, wobei entweder als erster Parameter bestimmt wird, welche Masse des Druckmediums, insbesondere welcher Massenstrom, benötigt wird, um während des Druckaufbaus eine bestimmte Druckdifferenz zu erreichen, oder als erster Parameter bestimmt wird, welches Volumen des Druckmediums, insbesondere welcher Volumenstrom, benötigt wird, um während des Druckaufbaus eine bestimmte Druckdifferenz zu erreichen.

2. Verfahren nach Anspruch 1,
**dadurch gekennzeichnet, dass** als zweiter Parameter das zum Erreichen einer bestimmten Druckdifferenz aus der Hochdruckkammer (2) zu entlassende Volumen des Druckmediums herangezogen wird.

3. Verfahren nach Anspruch 1 oder 2,
**dadurch gekennzeichnet, dass** die Regelung anhand eines Parameterfelds erfolgt, wobei das Parameterfeld eine Mehrzahl von zweiten Parametern umfasst, die jeweils für einen bestimmten Abschnitt des Druckabbaus repräsentativ sind.

4. Verfahren nach Anspruch 1,
**dadurch gekennzeichnet, dass** beim Druckaufbau die Anzahl der Pumpenhübe gezählt wird, die benötigt wird, um die bestimmte Druckdifferenz zu erreichen.

5. Verfahren nach einem der vorherigen Ansprüche,
**dadurch gekennzeichnet, dass** dem zweiten Parameter zumindest ein Korrekturfaktor beigegeben wird.

6. Verfahren nach einem der vorherigen Ansprüche,
**dadurch gekennzeichnet, dass** der beim Druckaufbau aufgenommene erste Parameter an eine die Druckverringerung regelnde Datenverarbeitungsvorrichtung (7) übermittelt wird.

7. Verfahren nach einem der vorherigen Ansprüche,
**dadurch gekennzeichnet, dass** bei Beginn und/oder während der geregelten Phase (19) für ein Mittel zum Druckabbau (11) unter Heranziehung des zweiten Parameters ein Stellungsgrad bestimmt wird, mit dem ein gewünschter zeitlicher Verlauf des Druckabbaus erreicht werden kann.

8. Verfahren nach einem der vorherigen Ansprüche,
**dadurch gekennzeichnet, dass** nach dem Start des Druckabbaus der aktuelle Druck in der Hochdruckkammer (2) oder zwischen der Hochdruckkammer (2) und dem Mittel zum Druckabbau (11) mittels zumindest eines Drucksensors (9) gemessen wird und dass bei einer Abweichung zwischen dem gewünschten zeitlichen Verlauf des Druckabbaus und dem aktuell gemessenen Druck eine Korrektur des Druckabbaus erfolgt.

9. Verfahren nach einem der vorherigen Ansprüche,
**dadurch gekennzeichnet, dass** die Regelung innerhalb eines Zielkorridors verläuft.

10. System zur Hochdruckbehandlung eines Produkts, insbesondere zur Hochdruckbehandlung gemäß einem Verfahren nach einem der Ansprüche 1 bis 9, aufweisend eine erste Vorrichtung (3, 4) zur Beaufschlagung einer Druckkammer (2) mit einem Hochdruckmedium und eine zweite Vorrichtung (10, 11, 12) zur Verringerung des Drucks in der Druckkammer (2), wobei die zweite Vorrichtung (10, 11, 12) zumindest ein Mittel zum Druckabbau (11) und eine Datenverarbeitungsvorrichtung (7) umfasst, die über eine Datenverbindung (13) mit dem mindestens einen Mittel zum Druckabbau (11) verbunden ist,
wobei eine Messvorrichtung (5) vorhanden ist, die über eine Datenverbindung (6a, 6b, 6c) mit der Datenverarbeitungsvorrichtung (7) zur Regelung des zumindest einen Mittels zum Druckabbau (11) verbunden ist,
**dadurch gekennzeichnet, dass** die erste Vorrichtung (4) die Messvorrichtung (5) aufweist, wobei die Messvorrichtung (5) in Fließrichtung des Druckmediums entweder in einer Position vor (5 a) oder hinter (5 b) der Hochdruckpumpe (4) an der Druckleitung (3) angeordnet ist oder (5 c) an der Hochdruckpumpe (4) selbst angeordnet ist, wobei das System ferner eine Datenverbindung (8) umfasst, die mit einem Drucksensor (9) verbunden ist, der direkt (9a) mit der Hochdruckkammer (2) verbunden ist oder indirekt (9b) an einer Druckleitung (10) angeordnet ist, welche die Druckkammer (2) mit einem Regelventil (11) verbindet, wobei zwischen Druckkammer (2) und Regelventil (11) ein Absperrventil (12) vorgesehen ist, welches die Druckkammer (2) gegenüber dem Regelventil (11) abdichtet und wobei das Regelventil (11) über eine Datenverbindung (13) mit der Datenverarbeitungseinrichtung (7) verbunden ist und hierüber angesteuert wird.

11. System nach Anspruch 10,
**dadurch gekennzeichnet, dass** die Messvorrichtung (5) eine dynamische Volumenmesseinrichtung umfasst.

12. System nach Anspruch 10,
**dadurch gekennzeichnet, dass** die Messvorrichtung (5) eine dynamische Massenmesseinrichtung umfasst.

13. System nach Anspruch 10,
**dadurch gekennzeichnet, dass** die Messvorrichtung (5) einen Sensor zur Aufnahme der Pumpenhübe einer die Hochdruckkammer (2) beaufschlagenden Hochdruckpumpe (4) umfasst.

## Claims

1. Method for the high-pressure treatment of a product, in particular packaged food, wherein, in a first method step, the product is subjected to a pressure medium in a high-pressure chamber (2), wherein, in a subsequent method step, the pressure built up in the high-pressure chamber (2) is lowered again, wherein the lowering of the pressure takes place in one or more phases (17, 19, 20) and wherein, at least in one of the phases (19), the lowering of the pressure is controlled,
**characterized in that** a second parameter, which is determined by means of a first parameter recorded during the pressure buildup, is used for the control, wherein either which mass of the pressure medium, in particular which mass flow, is required to achieve a certain pressure difference during the pressure buildup is determined as the first parameter or which volume of the pressure medium, in particular which volume flow, is required to achieve a certain pressure difference during the pressure buildup is determined as the first parameter.

2. Method according to Claim 1,
**characterized**
**in that** the volume of the pressure medium that has to be let out of the high-pressure chamber (2) to achieve a certain pressure difference is used as the second parameter.

3. Method according to Claim 1 or 2,
**characterized**
**in that** the control is performed on the basis of a parameter field, the parameter field comprising a plurality of second parameters that are respectively representative of a certain segment of the pressure reduction.

4. Method according to Claim 1,
**characterized**
**in that**, during the pressure buildup, the number of pump strokes that are required to achieve a certain pressure difference is counted.

5. Method according to one of the preceding claims,
**characterized**
**in that** the second parameter is allocated at least one correction factor.

6. Method according to one of the preceding claims,
**characterized**
**in that** the first parameter, recorded during the pressure buildup, is transmitted to a data processing device (7) controlling the lowering of the pressure.

7. Method according to one of the preceding claims,
**characterized**
**in that**, at the beginning and/or during the controlled phase (19), a degree of adjustment with which a desired variation over time of the pressure reduction can be achieved is determined for a means for pressure reduction (11) by using the second parameter.

8. Method according to one of the preceding claims,
**characterized**
**in that**, after the start of the pressure reduction, the current pressure in the high-pressure chamber (2) or between the high-pressure chamber (2) and the means for pressure reduction (11) is measured by means of at least one pressure sensor (9) and in that, if there is a deviation between the desired variation over time of the pressure reduction and the currently measured pressure, a correction of the pressure reduction is performed.

9. Method according to one of the preceding claims,
**characterized**
**in that** the control follows a path within a target corridor.

10. System for the high-pressure treatment of a product, in particular for the high-pressure treatment according to a method according to one of Claims 1 to 9, comprising a first device (3, 4) for supplying a pressure chamber (2) with a high-pressure medium and a second device (10, 11, 12) for lowering the pressure in the pressure chamber (2), the second device (10, 11, 12) comprising at least one means for pressure reduction (11) and a data processing device (7), which is connected by way of a data link (13) to the at least one means for pressure reduction (11),
wherein there is a measuring device (5), which is connected by way of a data link (6a, 6b, 6c) to the data processing device (7) for controlling the at least one means for pressure reduction (11),
**characterized in that** the first device (4) comprises the measuring device (5), wherein the measuring device (5) is arranged on the pressure line (3) in the direction of flow of the pressure medium either in a position upstream (5a) or downstream (5b) of the high-pressure pump (4) or (5c) is arranged on the high-pressure pump (4) itself, wherein the system also comprises a data link (8), which is connected to a pressure sensor (9), which is connected directly (9a) to the high-pressure chamber (2) or is arranged indirectly (9b) on a pressure line (10), which connects the pressure chamber (2) to a control valve (11), wherein provided between the pressure chamber (2) and the control valve (11) is a shut-off valve (12), which seals off the pressure chamber (2) from the control valve (11) and wherein the control valve (11) is connected by way of a data link (13) to the data processing device (7) and is activated thereby.

11. System according to Claim 10,
**characterized**
**in that** the measuring device (5) comprises a dynamic volume measuring device.

12. System according to Claim 10,
**characterized**
**in that** the measuring device (5) comprises a dynamic mass measuring device.

13. System according to Claim 10,
**characterized**
**in that** the measuring device (5) comprises a sensor for recording the pump strokes of a high-pressure pump (4) supplying the high-pressure chamber (2).

## Revendications

1. Procédé de traitement à haute pression d'un produit et en particulier d'un produit alimentaire emballé, dans lequel, au cours d'une première étape du procédé, un fluide sous pression est appliqué sur le produit dans une chambre (2) à haute pression, et dans une étape suivante du procédé, la pression qui s'est établie dans la chambre (2) à haute pression est de nouveau diminuée, la diminution de la pression ayant lieu en une ou plusieurs phases (17, 19, 20) et la diminution de pression étant régulée au moins au cours d'une (19) des phases,
**caractérisé en ce que**
dans la régulation intervient un deuxième paramètre déterminé au moyen d'un premier paramètre enregistré lors de l'établissement de la pression et
**en ce que** comme premier paramètre est déterminée la masse du fluide sous pression et en particulier le débit massique nécessaire pour atteindre au cours de l'établissement de la pression une différence de pression définie ou
**en ce que** comme premier paramètre est déterminé le volume de fluide sous pression et en particulier le débit volumique nécessaire pour atteindre une différence de pression définie au cours de l'établissement de la pression.

2. Procédé selon la revendication 1, **caractérisé en ce que** comme deuxième paramètre intervient le volume de fluide sous pression à laisser s'échapper hors de la chambre (2) à haute pression pour atteindre la différence de pression définie.

3. Procédé selon les revendications 1 ou 2, **caractérisé en ce que** la régulation s'effectue au moyen d'un champ de paramètres, le champ de paramètres comprenant plusieurs deuxièmes paramètres qui représentent chacun une partie définie de l'établissement de la pression.

4. Procédé selon la revendication 1, **caractérisé en ce que** lors de l'établissement de la pression est compté le nombre de courses de pompe nécessaire pour atteindre la différence de pression définie.

5. Procédé selon l'une des revendications précédentes, **caractérisé en ce qu'**au moins un facteur de correction est ajouté aux deuxièmes paramètres.

6. Procédé selon l'une des revendications précédentes, **caractérisé en ce que** le premier paramètre enregistré lors de l'établissement de la pression est transmis à un ensemble (7) de traitement de données qui régule la diminution de pression.

7. Procédé selon l'une des revendications précédentes, **caractérisé en ce qu'**au début et/ou pendant la phase (19) régulée, un degré de réglage par lequel une évolution temporelle souhaitée de la diminution de pression peut être atteinte pour un moyen de diminution de pression (11) est déterminé en tenant compte du deuxième paramètre.

8. Procédé selon l'une des revendications précédentes, **caractérisé en ce qu'**après le démarrage de la diminution de pression, la pression effective qui règne dans la chambre (2) à haute pression ou entre le chambre (2) à haute pression et le moyen (11) de diminution de pression est mesurée au moyen d'au moins un capteur de pression (9) et **en ce qu'**une correction de la diminution de pression a lieu en cas d'écart entre l'évolution temporelle souhaitée de la diminution de pression et la pression effectivement mesurée.

9. Procédé selon l'une des revendications précédentes, **caractérisé en ce que** la régulation s'étend à l'intérieur d'un corridor cible.

10. Système de traitement sous haute pression d'un produit, en particulier pour un traitement sous haute pression recourant à un procédé selon les revendications 1 à 9, présentant un premier ensemble (3, 4) qui applique un fluide sous haute pression dans une chambre (2) à haute pression et un deuxième ensemble (10, 11, 12) de diminution de la pression qui règne dans la chambre (2) à haute pression,
le deuxième ensemble (10, 11, 12) de diminution de la pression comportant au moins un moyen (11) de diminution de pression et un ensemble (7) de traitement de données relié au moyen (11) de diminution de pression par une liaison de données (13),
un ensemble de mesure (5) étant prévu et étant relié par l'intermédiaire d'une liaison de données (6a, 6b, 6c) à l'ensemble (7) de traitement de données pour réguler le ou les moyens (11) de diminution de pression,
**caractérisé en ce que**
le premier ensemble (4) présente l'ensemble de mesure (5), l'ensemble de mesure (5) étant disposé dans la direction d'écoulement du fluide sous pression dans une position située sur le conduit (3) sous pression en avant (5a) ou en arrière (5b) de la pompe (4) à haute pression ou (5c) sur la pompe (4) à haute pression proprement dite, le système comportant en outre une liaison de données (8) raccordée à un capteur de pression (9) relié directement (9a) à la chambre (2) à haute pression ou indirectement (9b) sur un conduit (10) sous pression qui relie la chambre (2) à haute pression à une soupape de régulation (11), une soupape de blocage (12) qui ferme hermétiquement la chambre (2) à haute pression par rapport au moyen (11) de diminution de pression étant prévue entre la chambre (2) à haute pression et la soupape de régulation (11), la soupape de régulation (11) étant reliée au dispositif (7) de traitement de données par l'intermédiaire d'une liaison de données (13) et étant commandée par cet intermédiaire.

11. Système selon la revendication 10, **caractérisé en ce que** l'ensemble de mesure (5) comporte un dispositif de mesure dynamique de volume.

12. Système selon la revendication 10, **caractérisé en ce que** l'ensemble de mesure (5) comporte un dispositif de mesure dynamique de masse.

13. Système selon la revendication 10, **caractérisé en ce que** l'ensemble de mesure (5) comporte un capteur qui enregistre les courses d'une pompe (4) à haute pression qui agit sur la chambre (2) à haute pression.
